# EUROPÄISCHE PATENTSCHRIFT

(11) **EP 3 898 375 B1**
(45) Veröffentlichungstag und Bekanntmachung des Hinweises auf die Patenterteilung: **18.10.2023**
(21) Anmeldenummer: 19832624.1
(22) Anmeldetag: 17.12.2019
(51) Int. Cl.: B61D 23/02, A61G 3/06, B60P 1/44

(54) **PERSONENTRANSPORTFAHRZEUG**
PASSENGER TRANSPORT VEHICLE
VÉHICULE DE TRANSPORT DE PERSONNES

(30) Priorität: 18.12.2018 DE 102018132634
(43) Veröffentlichungstag der Anmeldung: 27.10.2021
(73) Patentinhaber: ALSTOM Holdings, 93400 Saint-Ouen-sur-Seine (FR)
(72) Erfinder: DINLER, Kenan, 2700 Wr. Neustadt (AT); PRAMPER, Rainer, 1100 Wien (AT)
(74) Vertreter: Zimmermann & Partner Patentanwälte mbB
(86) Internationale Anmeldenummer: PCT/EP2019/085749
(87) Internationale Veröffentlichungsnummer: WO 2020/127343

(56) Entgegenhaltungen:
- EP-A1- 2 778 009
- DE-A1- 3 519 299
- DE-U1-202009 010 472
- US-A1- 2016 074 261

## Beschreibung

### Technisches Gebiet

Die vorliegende Erfindung betrifft ein Personentransportfahrzeug mit einem Wagenkasten und einem Innenraum zum Transport von Fahrgästen. Insbesondere behandelt die Erfindung ein Personentransportfahrzeug mit einer Hubvorrichtung, welche zur Unterstützung von Fahrgästen beim Hinein- und Herausgelangen in das und aus dem Personentransportfahrzeug dient.

### Vorbekannter Stand der Technik

Allgemein sind Fahrzeuge zum Transport von Fahrgästen bekannt, beispielsweise ausgebildet als Fahrzeug des öffentlichen Nahverkehrs, insbesondere als Straßenbahn, U-Bahn, S-Bahn, Omnibus, etc. Dabei wird in mannigfaltiger Art Sorge getragen, dass jeder Fahrgast, unabhängig von seiner grundsätzlichen Verfassung, ohne größere Behinderung in den Fahrgastraum zu gelangen.

Beispielsweise sind dazu Personentransportfahrzeuge mit Hebebühnen ausgestattet, welche es in einem Rollstuhl befindlichen Fahrgästen ermöglicht, einen Höhenunterschied zwischen einem Boden einer Fahrzeugumgebung und einem Boden im Inneren des Fahrgastraums zu überwinden.

Die Veröffentlichungsschrift WO 80/02538 beschreibt einen Lift für einen Bus, welcher im Bereich einer Vorderseite eine Stufenvorrichtung aufweist, über die Fahrgäste in den Fahrgastraum des Busses einsteigen können. Um eine Person in einem Rollstuhl in das Innere des Busses transportieren zu können, ist die Stufenvorrichtung so ausgebildet, dass sich einzelne Stufen in eine Hebebühne formen können.

Die DE 35 19 299 A1 beschreibt eine Vorrichtung zur Beförderung eines Rollstuhls von einem Bahnsteig in einen Eisenbahnwagen auf. Die Vorrichtung umfasst eine ausfahrbare oder ausschwenkbare Trageinrichtung, die ein am Wagenkasten festgelegtes Ende und ein ausfahrbares oder ausschwenkbares Ende aufweist, an dem eine Hubvorrichtung zum Anheben einer Plattform angeordnet ist.

US 2016 / 0074261 A1 beschreibt eine Hubvorrichtung für einen Personenkraftfahrzeug. Die Hubvorrichtung umfasst auch hier eine ausfahrbaren Teleskoparm, an dem eine Hubeinrichtung zum Anheben einer Plattform angeordnet ist.

DE 20 2009 010 472 U1 beschreibt eine Hubvorrichtung für ein Schienenfahrzeug.

### Nachteile des Stands der Technik

Die bisher bekannten technischen Lösungen und Ausführungsformen sind jedoch entweder sehr komplex aufgebaut, gestatten keine effiziente Raumnutzung und/oder weisen ergonomische Unzulänglichkeiten auf.

### Problemstellung

Aufgabe der vorliegenden Erfindung ist es daher, ein Fahrzeug mit einer Hubvorrichtung bereitzustellen, das in effizienter den vorhandenen Bauraum nutzt, flexibel im Einsatz ist und gleichzeitig die Nachteile des Stands der Technik zu verhindern oder zumindest zu mindern vermag.

### Erfindungsgemäße Lösung

Die obige Aufgabe wird durch ein Personentransportfahrzeug des öffentlichen Personenverkehrs nach Anspruch 1 gelöst. Weitere Ausführungsformen der genannten Gegenstände ergeben sich aus den abhängigen Unteransprüchen und/oder aus den zusätzlich diskutierten Ausführungsformen.

Gemäß einer Ausführungsform weist das Personentransportfahrzeug einen Wagenkasten mit einem Innenraum auf, der fahrbar auf einem Untergrund, zum Beispiel mittels einzelner Räder oder Drehgestelle, abgestützt ist. Weiterhin ist ein Innenraum mit einem Fahrzeugboden vorgesehen, worin Fahrgäste sitzend und/oder stehend aufgenommen werden können. Ein solches Fahrzeug kann zum Beispiel ein Bus, eine Straßenbahn, eine S-Bahn, eine U-Bahn, ein Nahverkehrszug oder ein Schnellzug sein.

Das Personentransportfahrzeug ist dabei so ausgebildet, dass sich zwischen einem Bodenniveau des Fahrzeugbodens und einem Bodenniveau eines Umgebungsbodens einer unmittelbaren Fahrzeugumgebung ein Höhenunterschied ausbildet. Um aus der Umgebung in das Personentransportfahrzeug zu gelangen - oder umgekehrt - muss ein Fahrgast diesen Höhenunterschied überwinden, sofern nicht in der unmittelbaren Fahrzeugumgebung eine Vorrichtung vorgesehen ist, mithilfe dessen ein Fahrgast auf das Höhenniveau des Fahrzeugbodens gebracht werden kann. Eine solche Vorrichtung kann beispielsweise eine externe Hubvorrichtung oder ein entsprechend hoch ausgebildeter Bahnsteig sein. Insbesondere handelt es sich bei dem Personentransportfahrzeug nicht um ein sogenanntes Niederflurfahrzeug, welches insbesondere dadurch gekennzeichnet ist, dass ein vertikaler Abstand zwischen dem Fahrzeugboden und einer gemeinsamen Fahrbahntangente von Räderwerk und Fahrbahn, oder zwischen dem Fahrzeugboden und einer Abrollfläche eines Räderwerks, insbesondere zwischen Fahrzeugboden und einer Schienenoberkante nicht mehr als 25 cm, bevorzugt nicht mehr als 20 cm, besonders bevorzugt nicht mehr als 15 cm beträgt.

Erfindungsgemäß weist das Personentransportfahrzeug eine fahrzeugeigene Hubvorrichtung mit einer Plattform zum Aufnehmen eines Fahrgastes auf, wobei diese variabel auf das Bodenniveau der Fahrzeugumgebung und auf das Bodenniveau des Fahrzeugbodens gebracht werden kann. Ein Fahrgast kann dadurch ohne Überwindung eines wesentlichen Höhenunterschieds vom Umgebungsboden auf die Plattform gelangen. Von dort aus wird die Plattform mittels einer Hubeinrichtung der Hubvorrichtung angehoben und in unmittelbarer Umgebung an einer Türvorrichtung des Personentransportfahrzeugs positioniert. Somit wird der Fahrgast befähigt, wiederum ohne Überwindung eines wesentlichen Höhenunterschieds, von der Plattform durch eine Türvorrichtung des Personentransportfahrzeugs in einen Innenraum des Personentransportfahrzeugs - und umgekehrt - zu gelangen.

Die Hubvorrichtung weist dazu die Hubeinrichtung mit einer Hubeinheit auf. Die Hubeinheit ist dazu gegenüber dem Wagenkasten in einer Vertikalrichtung verschiebbar vorgesehen, und bewirkt das Heben bzw. den Hubvorgang der Plattform. Entsprechend kann die Hubeinrichtung mit einer Vertikalführung ausgestattet sein, an welcher die Hubeinheit zumindest teilweise in Vertikalrichtung verschiebbar befestigt ist. Gemäß einer Ausgestaltungsform, basiert die Hubeinrichtung nicht auf einem prinzipiellen Hebemechanismus, bei dem der Hubvorgang ausschließlich mittels Schwenken eines oder mehrerer Tragarme ermöglicht wird. Insbesondere ist es ausführungsgemäß der Hubvorrichtung zu eigen, dass der Hubvorgang und/oder ein Verschieben der Plattform in Vertikalrichtung mindestens durch eine rein translatorisch wirkende Hubeinrichtung ermöglicht wird, wobei insbesondere eine zusätzliche Schwenkeinrichtung (oder Ausrichteinrichtung) zum Einsatz kommen kann. Jedenfalls ist es erfindungsgemäß nicht ausreichend, eine Hubeinrichtung ausschließlich basierend auf einem Schwenk- oder Armmechanismus vorzusehen.

Die im Kontext dieser Erfindung gemachten Angaben zu einer Längsrichtung, Vertikalrichtung, Querrichtung und/oder einer Horizontalen beziehen sich auf einen bestimmungsgemäßen Einsatz des Personentransportfahrzeugs auf einer ebenen Fläche. Die Längsrichtung ist dabei im Wesentlichen gleich einer Längsrichtung eines Wagenkastens des Fahrzeugs, oder auch einer Fahrtrichtung bei Geradeausfahrt. Die Querrichtung bestimmt sich bezüglich der Gestalt des Wagenkastens des Fahrzeugs und kann somit senkrecht zu einer möglichen Fahrtrichtung bei Geradeausfahrt des Fahrzeugs ausgerichtet sein. Die Vertikalrichtung verläuft senkrecht zur Querrichtung, zur Horizontalen und zur Längsrichtung.

Weiterhin weist die Hubvorrichtung des Personentransportfahrzeugs eine Positionierungseinrichtung zum Führen und Verschieben der Plattform, insbesondere bezüglich des Wagenkastens, auf. Diese dient dazu, eine Position der Plattform mindestens bezüglich der Querrichtung, Längsrichtung und/oder Horizontalen einstellen zu können. Die Positionierungseinrichtung ist zwischen Wagenkasten und Plattform wirksam angeordnet.

Die Positionierungseinrichtung und die Hubeinrichtung sind dabei so mit der Plattform verbunden, dass beide im Zusammenwirken eine Position der Plattform in Vertikalrichtung und in Querrichtung des Wagenkastens beeinflussen können. Dabei ergänzen sich die Positionierungseinrichtung und die Hubeinrichtung derart, sodass eine Bewegung der Plattform in einer Querschnittsebene des Wagenkastens, zum Beispiel eine Position in Vertikalrichtung und eine Position in Querrichtung, beeinflusst werden kann. Die Wirkungsrichtung der Positionierungseinrichtung hängt insbesondere vom Einsatzort der Hubvorrichtung und/oder von der Ausrichtung einer Türvorrichtung des Personentransportfahrzeugs ab. Die Hubvorrichtung kann zum Beispiel an einer Front oder einem Ende des Personentransportfahrzeugs vorgesehen sein, wenn an einem solchen Ende eine Türvorrichtung, zum Beispiel an einer Rückwand des Personentransportfahrzeugs, vorhanden ist. Entsprechend würde eine Positionierungseinrichtung dann eine Position der Plattform in Längsrichtung beeinflussen und festlegen können. Insbesondere sind die Bezugsrichtungen Querrichtung und Längsrichtung je nach Einsatzort der Hubvorrichtung relevant, und dann insbesondere austauschbar.

Die Plattform stützt sich über die Hubeinrichtung und über die Positionierungseinrichtung gegenüber dem Wagenkasten ab. In diesem Fall erfolgt ein Kraftfluss von der Plattform in den Wagenkasten parallel über die Hubeinrichtung und über die Positionierungseinrichtung.

In Erweiterung des Grundprinzips wird vorgeschlagen, dass das Personentransportfahrzeug mit einer Ausrichteinrichtung mit einem Ausrichtelement ausgestattet ist. Die Ausrichteinrichtung ist dabei so ausgestaltet, dass die die Position der Plattform bezüglich ihrer Ausrichtung in der Horizontalen festgelegt und korrigiert werden kann.

Gemäß einer besonderen Ausgestaltungsform ist das Ausrichtelement so vorgesehen und an der Ausrichteinrichtung angeordnet, sodass die Plattform unterschiedliche Schrägstellungen bezüglich der Horizontalen einnehmen kann, bzw. diese einstellbar sind. Insbesondere sind dafür Mittel und/oder Manipulatoren vorgesehen, sodass eine Schrägstellung der Plattform gegenüber einer Horizontalen bis zu +/- 10°, bevorzugt bis zu +/- 5°, besonders bevorzugt bis zu +/- 3°, einstellbar ist. Dadurch wird erstmalig erreicht, dass die Ausrichtung der Plattform spezifischen lokalen Anforderungen Rechnung tragen kann, zum Beispiel falls der Umgebungsboden der unmittelbaren Fahrzeugumgebung nicht eben ist oder aus anderen Gründen eine Anpassung der Position der Plattform notwendig ist.

Weiterhin wird vorgeschlagen, die Plattform mittels der Ausrichteinrichtung mit der Hubeinheit zu verbinden. Dabei ist die Ausrichteinrichtung derart an der Hubeinheit angeordnet, sodass die Ausrichteinrichtung zusammen mit der Hubeinheit, insbesondere zumindest teilweise, in Vertikalrichtung gegenüber dem Wagenkasten verschiebbar vorgesehen ist. Entsprechend wird bei einem Hubvorgang die gesamte Ausrichteinrichtung zusammen mit der Hubeinheit zumindest teilweise in Vertikalrichtung verschoben. Insbesondere ist die Ausrichteinrichtung mit der Hubeinrichtung nicht integral ausgebildet, sodass eine klare Funktionstrennung zwischen Hubeinrichtung und Ausrichteinrichtung vorhanden ist. Die Hubeinrichtung, gegebenenfalls zusammen mit anderen Komponenten, übernimmt die Aufgabe, die Plattform zumindest teilweise in Vertikalrichtung zu verschieben. Im Gegensatz dazu dient die Ausrichteinrichtung dazu, eine Position der Plattform gegenüber der Horizontalen einzustellen.

Gemäß einer bevorzugten Ausgestaltung weist die Hubeinrichtung neben der Hubeinheit eine Vertikalführung und einen Hubantrieb auf. Die Vertikalführung und die Hubeinheit sind so gestaltet, dass die Hubeinheit gegenüber dem Wagenkasten eine translatorische, insbesondere eine rein-(ausschließlich-)translatorische Bewegung ausführen kann. Entsprechend ist der Hubantrieb so zwischen Hubeinheit und Vertikalführung vorgesehen, sodass die Hubeinheit gegenüber der Vertikalführung verschoben werden kann.

Gemäß einer weiteren Ausgestaltung ist die Hubeinrichtung als Spindeltrieb, insbesondere mit Führungsmitteln ausgestaltet. Entsprechend - jedoch nicht beschränkt auf den Spindelantrieb - können Vertikalführung, Hubantrieb und gegebenenfalls die Hubeinheit derart integral ausgebildet sein, sodass zumindest die Führung und der Antrieb ineinander übergehende Funktionen darstellen. Im Fall des Spindeltriebs bedeutet das beispielsweise, dass eine Spindel vorgesehen ist, deren Rotation zum Verschieben der zum Wagenkasten, bzw. zu einer weiteren Führung feststehenden (unverdrehbaren) Hubeinheit führt. Entsprechend fungiert die Spindel gleichzeitig als Aktuator und (Teil)-Führung für die Hubeinheit.

Gemäß einer Weiterentwicklung ist die Plattform mittels mindestens eines Trägers mit der Ausrichteinrichtung drehbar verbunden. Dadurch ist die Plattform um die Ausrichteinrichtung in einer Schwenkrichtung schwenkbar vorgesehen. Eine Drehachse dieser Schwenkrichtung verläuft im Wesentlichen in der Horizontalen und/oder in einer von der Längsrichtung und der Querrichtung aufgespannten Ebene.

Auf diese Weise ist es erstmalig möglich, eine Plattform für Fahrgäste bezüglich des Wagenkastens in zwei Freiheitsgraden, nämlich in Vertikalrichtung und in Querrichtung, Längsrichtung, und/oder in der Horizontalen, zu bewegen. Zum einen dient die Hubvorrichtung mit Hubeinheit dazu, eine translatorische Bewegung der Plattform bezüglich des Wagenkastens, insbesondere in Vertikalrichtung, zu ermöglichen; die Ausrichteinrichtung ermöglicht dabei, eine Schwenkbewegung der Plattform bezüglich der Hubeinheit darzustellen. Festzuhalten ist insbesondere, dass die sequenzielle Kinematik der Plattform bezüglich des Wagenkastens derart ausgebildet ist, dass die gesamte Ausrichteinrichtung über die Hubeinheit gegenüber dem Wagenkasten, zumindest teilweise, in Vertikalrichtung verschiebbar ist.

Gemäß einer weiteren Ausgestaltungsform ist ausgeschlossen, dass die gesamte Hubeinrichtung gegenüber dem Wagenkasten mittels Ausrichteinrichtung ausgerichtet werden kann. Vielmehr ist nur möglich, die gesamte Ausrichteinrichtung gegenüber dem Wagenkasten mittels Hubeinrichtung zumindest teilweise in Vertikalrichtung zu verschieben.

Im Zuge einer Ausführungsform wird das Folgende offenbarte: Die Ausrichteinrichtung weist eine Ausrichtbasis auf, die mit einer bestimmten Ausrichtung gegenüber der Horizontalen und/oder gegenüber dem Wagenkasten des Personentransportfahrzeugs angeordnet ist. Die Ausrichtbasis kann ein Strukturelement sein, zum Beispiel ein Träger, welches verschieden beabstandete Lagerpunkte und Abstützplatte zur Befestigung weiterer tragende Strukturteile bereitstellt.

Weiterhin kann die Ausrichtbasis mit der Hubeinheit, insbesondere dreh- und/oder kippsteif, verbunden sein und/oder einstückig damit ausgebildet sein, sodass ein Verschieben der Hubeinheit an der Hubeinrichtung stets auch zu einem Verschieben der Ausrichtbasis führt.

Insbesondere ist eine solche Ausrichtung der Ausrichtbasis gegenüber dem Wagenkasten in einem gewissen Maß einstellbar, zum Beispiel gegenüber der Horizontalen bis zu +/-10°, bevorzugt bis zu +/- 5°, besonders bevorzugt bis zu +/- 3°, einstellbar ist. Die Ausrichtbasis kann als Referenzelement zur Ausrichtung der Plattform verwendet werden.

Gemäß einer Ausgestaltung kann die Ausrichtbasis mit einem ersten Lagerpunkt und mit einem zweiten Lagerpunkt ausgestattet sein. Dabei ist/sind ein erster Träger an dem ersten Lagerpunkt und/oder ein zweiter Träger an dem zweiten Lagerpunkt drehbar vorgesehen. Vorzugsweise verläuft eine Drehachse der Lagerpunkte in der Horizontalen und/oder in einer von der Längsrichtung und der Querrichtung aufgespannten Ebene.

Die Träger dienen dazu die Plattform mit der Ausrichtbasis zu verbinden, sodass die Ausrichtung der Plattform in Horizontalrichtung mechanisch mit einer Ausrichtung der Ausrichtbasis verschränkt ist.

Entsprechend können der erste Träger mit einem ersten Befestigungspunkt der Plattform und der zweite Träger mit einem zweiten Befestigungspunkt der Plattform verbunden sein. Auf diese Weise wird der Effekt erreicht, dass die Ausrichtung der Plattform durch eine Ausrichtung der Ausrichtbasis bestimmt wird, wobei die Ausrichtbasis zusammen mit der Hubeinheit zumindest teilweise, insbesondere ausschließlich, in Vertikalrichtung verschoben werden kann. Insbesondere findet zwischen Ausrichtbasis und Plattform zumindest teilweise eine parallelverschiebende Verschränkung statt.

Gemäß einer weiteren Ausgestaltungsform ist einer der Träger, insbesondere ein erster Träger und ein zweiter Träger, derart, insbesondere konkav bezüglich des Personentransportfahrzeugs, geformt, insbesondere gebogen, sodass mindestens ein, insbesondere beide Träger, eine Geländerfunktion für den Fahrgast bereitstellt/en. Um diese Doppelfunktion zu erreichen können die Träger beispielsweise von einer Oberseite der Plattform nach oben hin weg verlaufen.

Im Zuge der Erfindung wird offenbart, eine Hubvorrichtung, eine Hubeinrichtung und Träger jeweils beidseitig an der Plattform und/oder in unmittelbarer Umgebung von Türvorrichtungen anzuordnen. Als Seiten gelten hierbei Bereiche der Plattform, über welche ein Fahrgast weder die Plattform betritt, noch diese verlässt.

Weiterhin können die Komponenten der Hubvorrichtung so ausgebildet sein, sodass die Plattform unter oder in dem Fahrzeugboden verstaut werden kann. Beispielsweise sind die Träger zwischen Ausrichtbasis und Plattform so gestaltet, dass diese L- oder J-ähnlich eine Seitenwand des Personentransportfahrzeugs übergreifen und dadurch die Plattform im Unterbodenbereich des Fahrzeugs verstaut werden kann.

Gemäß einer Ausgestaltung des Personentransportfahrzeugs ist die Positionierungseinrichtung derart zwischen Wagenkasten und der Plattform oder derart zwischen Hubeinrichtung und der Plattform vorgesehen, sodass durch Betätigung der Positionierungseinrichtung eine Position der Plattform in Schwenkrichtung um die Ausrichteinrichtung und/oder um die Hubeinrichtung herum einstellbar ist. Durch die Konzeption der Aufhängung der Plattform mittels Träger an der Hubeinrichtung, ergibt sich eine drehbare/schwenkbare Anordnung der Plattform um die Hubeinrichtung, d. h. um die Hubeinheit, und/oder um die Ausrichteinrichtung, d. h. um die Ausrichtbasis. Eine entsprechende Drehachse verläuft im Wesentlichen in der Horizontalen und/oder in einer von der Längsrichtung und der Querrichtung aufgespannten Ebene.

Gemäß einer besonderen Ausgestaltung ist die Positionierungseinrichtung mit einem Ende an einem Positionierungslager am Wagenkasten und mit einem anderen Ende an einem Positionierungspunkt der Plattform verbunden. Die Verbindung und/oder ein Kraftfluss verlaufen zwischen Plattform und Wagenkasten mittels der Positionierungseinrichtung parallel zu der Verbindung zwischen Plattform und Wagenkasten mittels der Hubeinrichtung.

Gemäß einer zusätzlichen oder alternativen Ausführungsform, die nicht zur Erfindung gehört, ist die Hubvorrichtung, insbesondere die Hubeinrichtung und die Positionierungseinrichtung, so konzipiert, sodass die Positionierungseinrichtung mit einem Ende an einem Positionierungslager an der Hubeinheit der Hubeinrichtung und mit einem anderen Ende an einem Positionierungspunkt an dem Träger verbunden ist. Gemäß dieser Anordnung verläuft ein Kraftfluss zwischen Plattform und Wagenkasten ausschließlich über die Hubeinrichtung.

Im Kontext einer oder mehrerer der voranstehenden Ausführungsbeispiele wird offenbart, dass das Personentransportfahrzeug mindestens eine Sensorvorrichtung zum Detektieren einer Position der Plattform aufweist. Dabei kann eine Position der Plattform bezüglich des Umgebungsbodens der Fahrzeugumgebung, zur Türvorrichtung und/oder zum Fahrzeugrahmen überwacht werden. Weiterhin ist eine Steuervorrichtung zum Ansteuern der Hubeinrichtung und der Positionierungseinrichtung derart vorgesehen, sodass die Plattform automatisch aus einer Stauposition in eine Beladungsposition auf den Umgebungsboden - und zurück - gebracht werden. Außerdem kann die Plattform mittels der Steuervorrichtung aus einer Beladungsposition auf dem Umgebungsboden in eine Fahrzeugposition, geeignet zum stufenlosen Übertritt des Fahrgasts von der Plattform durch eine Türvorrichtung in einen Innenraum des Personentransportfahrzeugs und zurück, und/oder automatisch aus der Fahrzeugposition in die Stauposition und zurück gefahren werden.

Die Hubvorrichtung ermöglicht somit, dass die Plattform je nach Bedarf die Stauposition, die Beladungsposition und die Fahrzeugposition automatisch einnehmen kann. Zu diesem Zweck überwacht die Sensorvorrichtung die Position der Plattform und steuert die Hubeinrichtung und die Positionierungseinrichtung entsprechend an.

Insbesondere ist denkbar, dass die Sensorvorrichtung zumindest einen an der Plattform angeordneten Abstandssensor aufweist, um einen Vertikalabstand der Plattform oder einer Rampe der Plattform zum Umgebungsboden zu messen.

Die voranstehenden beschriebenen Ausführungsformen können beliebig, jedoch insbesondere aus Sicht des Fachmanns in sinnhafter Weise miteinander kombiniert werden; beispielsweise ist denkbar, dass das Personentransportfahrzeug mehrere Positionierungseinrichtung aufweist, wobei eine erste Positionierungseinrichtung zwischen Plattform und Wagenkasten und eine zweite Positionierungseinrichtung zwischen Plattform und Hubeinrichtung wirksam vorgesehen ist.

### Kurzbeschreibung der Figuren

Die beiliegende Zeichnung veranschaulicht Ausführungsformen und dient zusammen mit der Beschreibung der Erläuterung der Prinzipien der Erfindung. Die Elemente der Zeichnung sind relativ zueinander und nicht notwendigerweise maßstabsgetreu.
Fig. 1 zeigt ein Personentransportfahrzeugs gemäß einer exemplarischen Ausführungsform,
Fig. 2 repräsentiert einen schematischen Querschnitt durch das Personentransportfahrzeug mit einer in einer Stauposition befindlichen Hubvorrichtung gemäß einer ersten erfindungsgemäßen Ausführungsform,
Fig. 3 die Hubvorrichtung gemäß Fig. 2 in einer Beladungsposition,
Fig. 4 die Hubvorrichtung gemäß Fig. 2 in einer Fahrzeugposition, und
Fig. 5 gibt einen schematischen Querschnitt durch das Personentransportfahrzeug mit einer in Beladungsposition befindlichen Hubvorrichtung gemäß einer zweiten Ausführungsform, die nicht zur Erfindung gehört.

### Ausführungsbeispiele

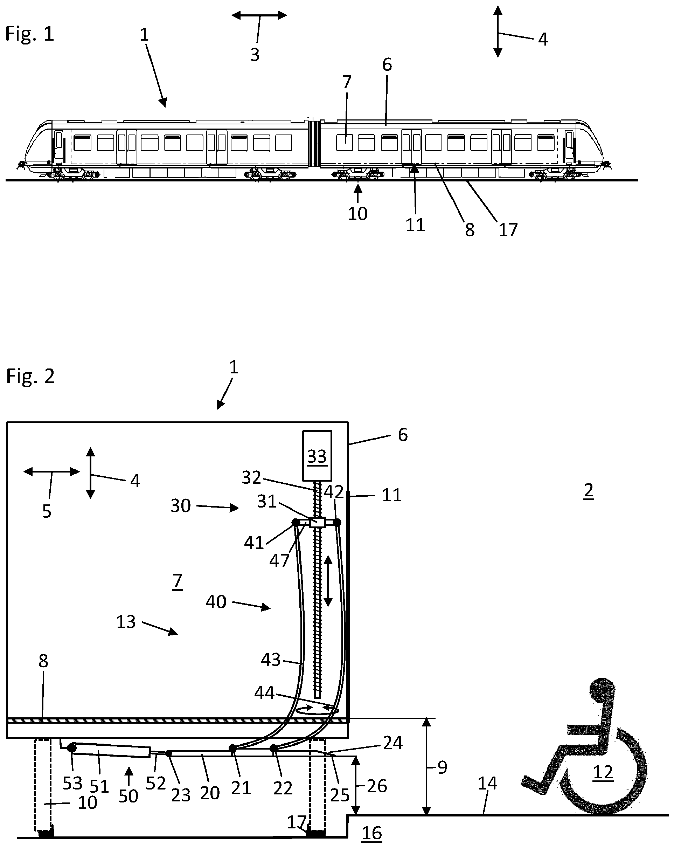

Zur Verdeutlichung des Gesamtverständnisses wird anhand Fig. 1 ein als Schienenfahrzeug ausgebildetes Personentransportfahrzeug 1 dargestellt. Dieses umfasst zwei Waggons mit zwei Wagenkästen 6, wobei der Zugang für Fahrgäste von einer Fahrzeugumgebung 2 in einen Innenraum 7 des jeweiligen Wagenkastens 6 mithilfe einer Türvorrichtung 11 ermöglicht wird.

Weiterhin ist das Personentransportfahrzeug 1 über Drehgestelle und einem Räderwerk 10 fahrbar auf Schienen 17 gelagert. Begibt sich das Personentransportfahrzeug 1 an eine Haltestelle so kann sich zwischen der Türvorrichtung 11 und der Kante eines Bahnsteigs 16 ein Höhenunterschied 9 ergeben.

Bezüglich des Fahrzeugs wird eine Längsrichtung 3 eine Vertikalrichtung 4 und eine Querrichtung oder Horizontalrichtung 5 definiert.

Fig. 2 bis Fig. 4 zeigt eine erste Ausführungsform des Personentransportfahrzeugs 1, insbesondere eine erste Ausführungsform einer Hubvorrichtung 13 des Personentransportfahrzeugs 1 im Bereich der Türvorrichtungen 11. Der Wagenkasten 6 des Personentransportfahrzeugs 1 ist dabei mithilfe eines Räderwerks 10 fahrbar auf Schienen 17 gelagert. In den gezeigten Darstellungen befindet sich das Personentransportfahrzeug 1 im Bereich eines Bahnsteigs 16, wobei sich zwischen dem Boden 14 des Bahnsteigs 16, auch genannt als Boden der unmittelbaren Fahrzeugumgebung 2, und dem Fahrzeugboden 8 ein Höhenunterschied 9 ergibt.

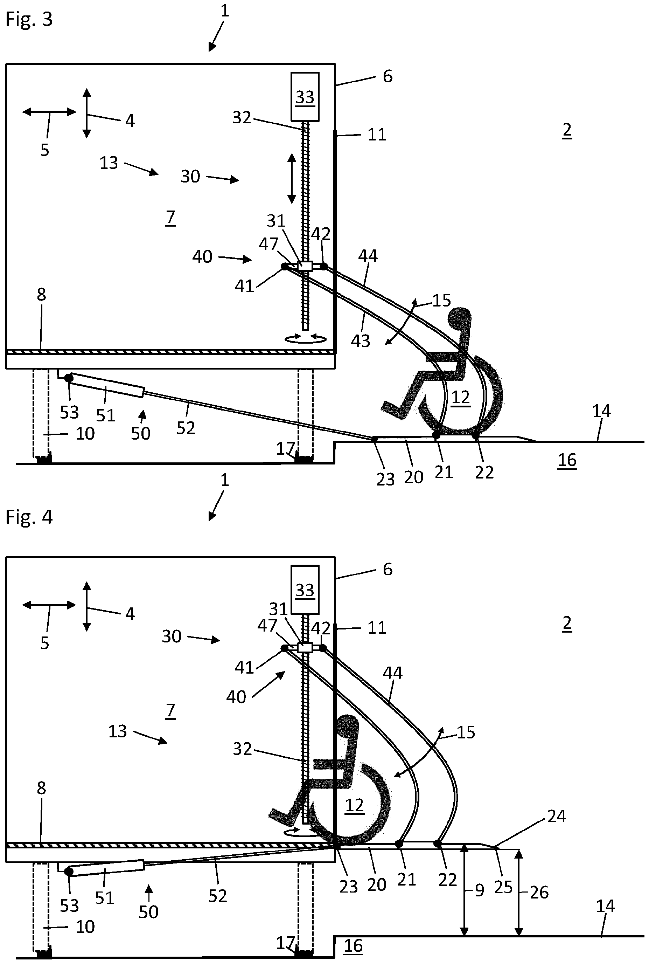

Ein auf dem Bahnsteig 16 oder im Innenraum 7 befindlicher Fahrgast vermag diesen Höhenunterschied 9 durch Überschreiten überwinden zu können. Für einen mobilitätseingeschränkten Fahrgast 12, zum Beispiel in einem Rollstuhl, stellt sich der Höhenunterschied 9 als unüberwindbar dar. Zu diesem Zweck weist das Personentransportfahrzeug 1 eine Hubvorrichtung 13 mit einer Plattform 20 auf, wobei die Plattform 20 mindestens eine Stauposition (Fig. 2), eine Beladungsposition (Fig. 3) und eine Fahrzeugposition (Fig. 4) einnehmen kann. Sinnvolle Zwischenpositionen der Plattform 20 sind nicht ausgeschlossen. Befindet sich die Plattform 20 in der Stauposition, so ist diese im Wesentlichen in einem Unterbodenbereich oder unter dem Fahrzeugboden 8 des Personentransportfahrzeugs 1 verstaut, sodass dieses ohne Erweiterung des Lichtraumprofils verkehren kann. Ist die Plattform 20 gemäß Fig. 3 in der Beladungsposition, so befindet sich die nutzbare Oberfläche der Plattform 20 im Wesentlichen auf demselben Höhenniveau wie der Boden 14 des Bahnsteigs 16. Ein Bewegungs-eingeschränkter Fahrgast 12, im Folgenden "der Fahrgast 12", wird somit befähigt, ohne Überwindung eines Höhenunterschiedes zum Beispiel über eine Rampe 24 auf die Plattform 20 zu gelangen. Mithilfe von Fig. 4 wird die Plattform 20 in einer sogenannten Fahrzeugposition gezeigt. Dabei befindet sich die Plattform 20 unmittelbar an einer Türvorrichtung 11 des Personentransportfahrzeugs 1, wobei ein Höhenniveau des Fahrzeugbodens 8 im Wesentlichen gleich wie das Höhenniveau der Plattform 20 ist, und zusätzlich kein Spalt zwischen Plattform 20 und dem Fahrzeugboden 8 in Querrichtung 5 vorhanden ist.

Die Hubvorrichtung 13 gemäß der in Fig. 2 bis Fig. 4 gezeigte Ausführungsformen weisen eine Hubeinrichtung 30, eine Ausrichteinrichtung 40 und eine Positionierungseinrichtung 50 auf. Durch Zusammenwirken der Ausrichteinrichtung 40 und der Positionierungseinrichtung 50 wird erreicht, dass die Plattform 20 um Lagerpunkte 41 und 42 in einer Schwenkrichtung 15 geschwenkt werden kann.

Weiterhin ermöglicht die Hubeinrichtung 30, dass die Plattform weiterhin in Vertikalrichtung 4 verschoben werden kann. Die Hubvorrichtung 30 kann beispielsweise eine Hubeinheit 31, eine als Spindeltrieb ausgeführte Vertikalführung 32 und einen Hubantrieb 33 aufweisen. Wird der Spindeltrieb der Vertikalführung 32 mittels Hubantrieb 33 gedreht, so erfährt die Hubeinheit 31 eine Verschiebung in Vertikalrichtung 4. Das eigentliche Stellelement der Hubeinrichtung 30 ist somit die Hubeinheit 31, welche bei Betätigung der Hubeinrichtung 30 gegenüber dem Wagenkasten 6 verschoben wird.

Die Hubeinheit 31 wiederum mit dient als mittelbares oder unmittelbares Trägerbauteil für die Plattform 20 und kann gegebenenfalls gleichzeitig eine Ausrichtbasis 47 der Ausrichteinrichtung 40 darstellen.

Die Ausrichteinrichtung 40 wird mindestens durch eine Ausrichtbasis 47 mit einem ersten Lagerpunkt 41 und einem zweiten Lagerpunkt 42 gebildet und kann zumindest teilweise gegenständlich eigenständig oder auch funktional integriert mit der Hubeinheit 31 gestaltet sein.

An dem ersten Lagerpunkt 41 kann ein erster Träger 43 und an dem zweiten Lagerpunkt 42 ein zweiter Träger 44 in Schwenkrichtung 15 schwenkbar befestigt sein, wobei die Plattform 20 mithilfe der Träger 43 und 44 zumindest teilweise getragen wird. Dazu ist die Plattform 20 über einen ersten Befestigungspunkt 21 mit dem ersten Träger 43 und über einen zweiten Befestigungspunkt 22 mit dem zweiten Träger 44 verbunden. Der erste und der zweite Träger 42 und 43 verbinden mit jeweils einem Ende die Ausrichtbasis 47 mit der Plattform 20.

Im vorliegenden Ausführungsbeispiel ist die Hubeinheit 31 drehsteif an der Vertikalführung 32 gelagert und trägt bzw. bildet die Ausrichtbasis 47. Bei entsprechender Gestaltung der Abstände der Lagerpunkte 41 und 42 bzw. der Befestigungspunkte 21 und 22, und bei geeigneter Gestaltung der Träger 43 und 44 wird erreicht, dass die Plattform 20 stets die gleiche Ausrichtung in der horizontalen wie die Ausrichtbasis 47 innehat.

Die Positionierungseinrichtung 50 greift zwischen einem Positionierungslager 53 am Wagenkasten 6 und einem Positionierungspunkt 23 der Plattform 20 an. Auf diese Weise wirkt die Positionierungseinrichtung 50 für die Plattform 20 wie ein Stellhebel, wobei ein Verschieben eines Positionierungselements 52 durch einen Positionierungsantrieb 51 der Positionierungseinrichtung 50 zu einer Schwenkbewegung der Plattform 20 an den Trägern 43 und 44 um die Lagerpunkte 41 und 42 in Schwenkrichtung 15 führt.

Durch ein Zusammenwirken der Positionierungseinrichtung 50 und der Hubeinrichtung 30 kann die Plattform 20 gezielt um die verschiebbaren Lagerpunkte 41 und 42 geschwenkt werden. Auf diese Weise wird erreicht, dass die Plattform 20 in kontrollierter Weise aus der Stauposition in die Beladungsposition, und aus der Beladungsposition in die Fahrzeugposition und zurück bewegt werden kann.

Zur Automatisierung der Einnahme der Positionen der Plattform 20 sind eine nicht gezeigte Sensorvorrichtung und eine Steuervorrichtung vorgesehen. Dazu ist an der Rampe 24 der Plattform 20 mindestens ein Abstandssensor 25 angeordnet, womit ein vertikaler Abstand zwischen der Plattform 20 und dem Boden 14 der Fahrzeugumgebung 2 gemessen werden kann. Weiterhin können Sensoren zur Bestimmung einer exakten Lage der Plattform 20 in der Stauposition und/oder in der Fahrzeugposition vorgesehen sein.

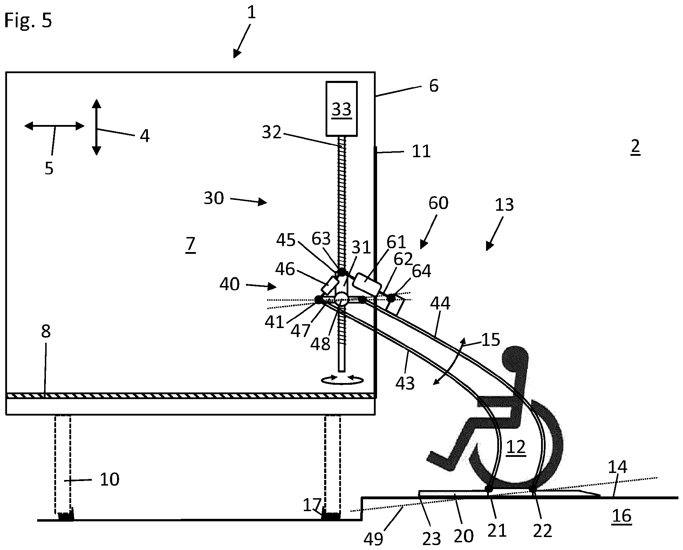

Mithilfe Fig. 5 wird eine zweite Ausführungsform des Personentransportfahrzeugs 1 bzw. eine zweite Ausführungsform der Hubvorrichtung 13 schematisch dargestellt. Im Unterschied zur ersten Ausführungsform ist die Positionierungseinrichtung 60 dabei nicht wirksam zwischen Plattform 20 und dem Wagenkasten 6, sondern zwischen einem Positionierungspunkt 64 an dem Träger 44 und einem Positionierungslager 63 an einem Stützelement 45 der Hubeinrichtung 30, insbesondere der Hubeinheit 31 vorgesehen. Indem eine Verschiebeposition eines Positionierungselements 62 mithilfe eines Positionierungsantriebs 61 der Positionierungseinrichtung 60 verändert wird, kann ein Abstand zwischen dem Positionierungspunkt 64 und dem Positionierungslager 63 verändert werden. Dies führt zu einer Schwenkbewegung der Träger 43 und 44 und damit der Plattform 12 um die Lagerpunkte 41 und 42 der Ausrichtbasis 47 in Schwenkrichtung 15.

Somit kann eine Position der Plattform 20 in Vertikalrichtung 4 und in Querrichtung 5, bzw. Horizontalrichtung 5 durch geeignete Betätigung der Hubeinrichtung 30 und der Positionierungseinrichtung 60 gezielt manipuliert werden.

Weiterhin wird gemäß Fig. 5 eine besondere Ausgestaltung einer Ausrichteinrichtung 40 gezeigt, wobei eine Schrägstellungen 49 der Plattform 20 beeinflusst werden kann.

Dazu ist die Ausrichtbasis 47 über ein Drehgelenk 48 verdrehbar an der Hubeinheit 31 angeordnet. Zusätzlich ist ein aktuatorisch wirkendes Ausrichtelement 46 vorhanden, womit eine Ausrichtung der Ausrichtbasis 47 bezüglich einer Horizontalen, bzw. Horizontalrichtung 5, eingestellt werden kann. Entsprechend der Schrägstellungen der Ausrichtbasis 47 kann die Schrägstellungen 49 der Plattform 20 beeinflusst werden.

Wenngleich hierin spezifische Ausführungsformen dargestellt und beschrieben worden sind, liegt es im Rahmen der vorliegenden Erfindung, die gezeigte Ausführungsform geeignet zu modifizieren, ohne vom Schutzbereich der vorliegenden Erfindung abzuweichen. Die Hubvorrichtung gemäß Fig. 5, die nicht zur Erfindung gehört, kann entsprechende Positionen der Plattform 20 wie gezeigt in den Fig. 2 bis Fig. 4 einnehmen. Zusätzlich ist denkbar, die Manipulationsvorrichtung der Ausrichteinrichtung zum Einstellen einer Schrägstellungen 49 der Plattform 20 gemäß Fig. 5 auch in der Hubvorrichtung 13 gemäß Fig. 2 bis Fig. 4 zu verwenden.

### Bezugszeichenliste

- 1: Personentransportfahrzeug
- 2: Fahrzeugumgebung
- 3: Längsrichtung
- 4: Vertikalrichtung
- 5: Querrichtung/Horizontalrichtung
- 6: Wagenkasten
- 7: Innenraum
- 8: Fahrzeugboden
- 9: Höhenunterschied
- 10: Räderwerk
- 11: Türvorrichtung
- 12: Fahrgast
- 13: Hubvorrichtung
- 14: Boden
- 15: Schwenkrichtung
- 16: Bahnsteig
- 17: Schiene

- 20: Plattform
- 21: erster Befestigungspunkt
- 22: zweiter Befestigungspunkt
- 23: Positionierungspunkt
- 24: Rampe
- 25: Abstandssensor
- 26: vertikaler Abstand

- 30: Hubeinrichtung
- 31: Hubeinheit
- 32: Vertikalführung (Spindel)
- 33: Hubantrieb
- 40: Ausrichteinrichtung
- 41: erster Lagerpunkt
- 42: zweiter Lagerpunkt
- 43: erster Träger
- 44: zweiter Träger
- 45: Stützelement
- 46: Ausrichtelement
- 47: Ausrichtbasis
- 48: Drehgelenk
- 49: Schrägstellung

- 50: Positionierungseinrichtung
- 51: Positionierungsantrieb
- 52: Positionierungselement
- 53: Positionierungslager

- 60: Positionierungseinrichtung
- 61: Positionierungsantrieb
- 62: Positionierungselement
- 63: Positionierungslager
- 64: Positionierungspunkt

## Patentansprüche

1. Personentransportfahrzeug (1) des öffentlichen Personenverkehrs, aufweisend
- einen Wagenkasten (6),
- einen derart im Wagenkasten (6) vorgesehenen Fahrzeugboden (8) zum Aufnehmen von Fahrgästen (12), so dass sich zwischen einem Bodenniveau des Fahrzeugbodens (8) und einem Bodenniveau eines Umgebungsbodens (14) einer unmittelbaren Fahrzeugumgebung (2) ein Höhenunterschied (9) ausbildet, und
- eine Hubvorrichtung (13) für einen Fahrgast (12) zum Überwinden des Höhenunterschieds (9),
- wobei die Hubvorrichtung (13)
o eine Plattform (20) zum Aufnehmen des Fahrgasts (12),
o eine Hubeinrichtung (30) mit einer gegenüber dem Wagenkasten (6) in einer Vertikalrichtung (4) verschiebbar angeordneten Hubeinheit (31) zum Heben der Plattform (20) und des Fahrgasts (12), insbesondere zumindest teilweise, in der Vertikalrichtung (4) und
o eine Positionierungseinrichtung (50) ausgebildet zum Führen und Verschieben der Plattform (20) und des Fahrgasts (12) während des Hebens, insbesondere zumindest teilweise, in einer Horizontalrichtung oder Querrichtung (5)
aufweist, wobei sich die Plattform (20) jeweils über die Hubeinrichtung (30) und über die Positionierungseinrichtung (50) gegenüber dem Wagenkasten (6) abstützt, sodass ein Kraftfluss von der Plattform (20) in den Wagenkasten (6) parallel über die Hubeinrichtung (30) und über die Positionierungseinrichtung (50) erfolgt.

2. Personentransportfahrzeug (1) nach Anspruch 1, aufweisend eine Ausrichteinrichtung (40) ausgebildet zum Festhalten und/oder Ausrichten der Plattform (20) in einer bestimmten, insbesondere horizontalen, Ausrichtung.

3. Personentransportfahrzeug (1) nach Anspruch 2, wobei die Ausrichteinrichtung (40) mit einem Ausrichtelement (46) ausgebildet ist, sodass eine Schrägstellung (49) der Plattform (20) gegenüber einer Horizontalen bis zu +/- 10°, bevorzugt bis zu +/- 5°, besonders bevorzugt bis zu +/- 3°, einstellbar ist.

4. Personentransportfahrzeug (1) nach einem der Ansprüche 2 bis 3, wobei die Plattform (20) mittels der Ausrichteinrichtung (40) mit der Hubeinrichtung (30) verbunden ist, und wobei die Ausrichteinrichtung (40) derart an der Hubeinrichtung (30) angeordnet ist, so dass die Ausrichteinrichtung (40) in Vertikalrichtung (4) verschiebbar gegenüber dem Wagenkasten (6) vorgesehen ist.

5. Personentransportfahrzeug (1) nach Anspruch 4, wobei die Hubeinrichtung (30) die Hubeinheit (31), eine Vertikalführung (32) und einen Hubantrieb (33) derart aufweist, sodass die Hubeinheit (31) mittels der Vertikalführung (32) in Vertikalrichtung (4) gegenüber dem Wagenkasten (6) verschiebbar gelagert ist, und eine Bewegung der Hubeinheit (31) mittels des Hubantriebs (33) ermöglicht wird.

6. Personentransportfahrzeug (1) nach Anspruch 5, wobei die Hubeinrichtung (30) als Spindeltrieb insbesondere mit Führungsmitteln ausgestaltet ist.

7. Personentransportfahrzeug (1) nach einem der voranstehenden Ansprüche 4 bis 6, wobei die Plattform (20) derart mittels mindestens eines Trägers (43, 44) mit der Ausrichteinrichtung (40) drehbar verbunden ist, sodass die Plattform (20) um die Ausrichteinrichtung (40) in einer Schwenkrichtung (15) schwenkbar angeordnet ist.

8. Personentransportfahrzeug (1) nach Anspruch 7,
- wobei die Ausrichteinrichtung (40) eine Ausrichtbasis (47) mit einem ersten Lagerpunkt (41) und einem zweiten Lagerpunkt (42), einen an dem ersten Lagerpunkt (41) drehbar angebrachten ersten Träger (43) und einen an dem zweiten Lagerpunkt (42) drehbar angebrachten zweiten Träger (44) aufweist,
- wobei der erste Träger (43) mit einem ersten Befestigungspunkt (21) der Plattform (20) und der zweite Träger (44) mit einem zweiten Befestigungspunkt (22) der Plattform (20) verbunden ist, und
- wobei die Ausrichtbasis (47), die Lagerpunkte (41, 42), der erste und zweite Träger (43, 44), die Befestigungspunkte (21, 22) und/oder die Plattform (20) derart miteinander verbunden und ausgebildet sind, sodass die Ausrichtung der Plattform (20) in Horizontalrichtung (5) mechanisch mit einer Ausrichtung der Ausrichtbasis (47) verschränkt ist.

9. Personentransportfahrzeug (1) nach Anspruch 7 oder 8, wobei der Träger (43, 44), insbesondere ein erster Träger (43) und ein zweiter Träger (44), derart, insbesondere konkav bezüglich des Personentransportfahrzeugs (1), geformt, insbesondere gebogen, ist/sind, sodass mindestens ein Träger (43, 44), insbesondere beide Träger (43, 44), eine Geländerfunktion für den Fahrgast (12) bereitstellt/en.

10. Personentransportfahrzeug (1) nach einem der Ansprüche 7 bis 9, wobei die Positionierungseinrichtung (50) derart zwischen Wagenkasten (6) und der Plattform (20) vorgesehen ist, sodass durch Betätigung der Positionierungseinrichtung (50) eine Position der Plattform (20) in Schwenkrichtung (15) um die Ausrichteinrichtung (40) und/oder um die Hubeinrichtung (30) einstellbar ist.

11. Personentransportfahrzeug (1) nach einem der Ansprüche 7 bis 10, wobei die Hubvorrichtung (13) und die Positionierungseinrichtung (50) derart ausgebildet und mit der Plattform (20) verbunden sind, sodass eine Position der Plattform (20) in Vertikalrichtung (4) sowohl mittels Hubvorrichtung (13), insbesondere mittels Hubeinrichtung (30), als auch mittels der Positionierungseinrichtung (50) einstellbar ist.

12. Personentransportfahrzeug (1) nach einem der Ansprüche 10 oder 11, wobei die Positionierungseinrichtung (50) mit einem Ende an einem Positionierungslager (53) am Wagenkasten (6) und mit einem anderen Ende an einem Positionierungspunkt (23) der Plattform (20) verbunden ist.

13. Personentransportfahrzeug (1) nach einem der vorangestellten Ansprüche,
- aufweisend mindestens eine Sensorvorrichtung zum Detektieren einer Position der Plattform (20), insbesondere relativ zum Personentransportfahrzeug (1), zu einer Türvorrichtung (11) und/oder zum Umgebungsboden (14), und eine Steuervorrichtung zum Ansteuern der Hubeinrichtung (30) und der Positionierungseinrichtung (50) derart,
- sodass die Plattform (20) automatisch aus einer Stauposition in eine Beladungsposition auf dem Umgebungsboden (14) bringbar ist, und/oder
- sodass die Plattform (20) automatisch aus einer Beladungsposition auf dem Umgebungsboden (14) in eine Fahrzeugposition geeignet zum stufenlosen Übertritt des Fahrgasts (12) von der Plattform (20) durch eine Türvorrichtung (11) in einen Innenraum (7) des Personentransportfahrzeugs (1) und zurück bringbar ist, und/oder
- sodass die Plattform (20) automatisch aus einer Fahrzeugposition geeignet zum stufenlosen Übertritt des Fahrgasts (12) aus einem Innenraum (7) des Personentransportfahrzeugs (1) durch eine Türvorrichtung (11) auf die Plattform (20) in eine Stauposition und zurück bringbar ist.

14. Personentransportfahrzeug (1) nach Anspruch 13, wobei die Sensorvorrichtung mindestens einen an der Plattform (20) angeordneten Abstandssensor (25) zum Detektieren eines Vertikalabstandes (26) der Plattform (20) oder einer Rampe (24) der Plattform (20) von dem Umgebungsboden (14) aufweist.

## Claims

1. A passenger transport vehicle (1) of the public transport, comprising
- a car body (6),
- a vehicle floor (8) being provided in the car body (6) for accommodating passengers (12) such that a height difference (9) is formed between a floor level of the vehicle floor (8) and a floor level of a surrounding floor (14) of a direct environment of the vehicle (2), and
- a lifting arrangement (13) for a passenger (12) to overcome the height difference (9),
- wherein the lifting arrangement (13) comprises
o a platform (20) for receiving the passenger (12),
o a lifting system (30) with a lifting unit (31) being arranged displaceable in a vertical direction (4) with respect to the car body (6) for lifting the platform (20) and the passenger (12), in particular at least partially, in the vertical direction (4), and
o a positioning system (50) being configured for guiding and displacing the platform (20) and the passenger (12) during lifting, particularly at least partially, in a horizontal or transverse direction (5),
wherein the platform (20) is supported relative to the car body (6) via the lifting system (30) and via the positioning system (50), respectively, such that a force flow from the platform (20) into the car body (6) occurs in parallel via the lifting system (30) and via the positioning system (50).

2. The passenger transport vehicle (1) of claim 1, comprising an alignment system (40) being configured for holding and/or aligning the platform (20) in a certain, in particular horizontal, orientation.

3. The passenger transport vehicle (1) of claim 2, wherein the alignment system (40) is configured with an alignment element (46) such that an inclined setting (49) of the platform (20) relative to a horizontal is adjustable up to +/- 10°, preferably up to +/- 5°, particularly preferably up to +/- 3°.

4. The passenger transport vehicle (1) of any of claims 2 to 3, wherein the platform (20) is connected to the lifting system (30) by the alignment system (40), and wherein the alignment system (40) is arranged at the lifting system (30) such that the alignment system (40) is displaceable in the vertical direction (4) relative to the car body (6).

5. The passenger transport vehicle (1) of claim 4, wherein the lifting system (30) comprises the lifting unit (31), a vertical guide (32) and a lifting drive (33) such that the lifting unit (31) is supported by the vertical guide (32) so as to be displaceable in the vertical direction (4) relative to the car body (6), and a movement of the lifting unit (31) is enabled by the lifting drive (33).

6. The passenger transport vehicle (1) of claim 5, wherein the lifting system (30) is formed as a spindle drive, in particular with guiding means.

7. The passenger transport vehicle (1) of any of claims 4 to 6, wherein the platform (20) is rotatably connected to the alignment system (40) by at least one carrier (43, 44) such that the platform (20) is pivotally arranged about the alignment system (40) in a pivotal direction (15).

8. The passenger transport vehicle (1) of claim 7,
- wherein the alignment system (40) comprises an alignment base (47) having a first bearing point (41) and a second bearing point (42), a first carrier (43) being rotatably mounted to the first bearing point (41), and a second carrier (44) being rotatably mounted to the second bearing point (42),
- wherein the first carrier (43) is connected to a first attachment point (21) of the platform (20) and the second carrier (44) is connected to a second attachment point (22) of the platform (20), and
- wherein the alignment base (47), the bearing points (41, 42), the first and second carriers (43, 44), the attachment points (21, 22) and/or the platform (20) are connected to each other and configured such that the orientation of the platform (20) in the horizontal direction (5) is mechanically interlocked with an orientation of the alignment base (47).

9. The passenger transport vehicle (1) of any of claims 7 or 8, wherein the carrier (43, 44), in particular a first carrier (43) and a second carrier (44), is/are shaped, in particular curved, in such a way, in particular concave with respect to the passenger transport vehicle (1), that at least one carrier (43, 44), in particular both carriers (43, 44), provides a handrail function for the passenger (12).

10. The passenger transport vehicle (1) of any of claims 7 to 9, wherein the positioning system (50) is provided between the car body (6) and the platform (20) such that by actuating the positioning system (50) a position of the platform (20) in the pivoting direction (15) about the alignment system (40) and/or about the lifting system (30) can be adjusted.

11. The passenger transport vehicle (1) of any of claims 7 to 10, wherein the lifting arrangement (13) and the positioning system (50) are configured and connected to the platform (20) such that a position of the platform (20) in the vertical direction (4) can be adjusted both by means of the lifting arrangement (13), in particular by means of the lifting system (30), and by means of the positioning system (50).

12. The passenger transport vehicle (1) of any of claims 10 or 11, wherein the positioning system (50) is connected at one end to a positioning bearing (53) at the car body (6) and at another end to a positioning point (23) of the platform (20).

13. The passenger transport vehicle (1) of any of the preceding claims,
- comprising at least one sensor arrangement for detecting a position of the platform (20), in particular relative to the passenger transport vehicle (1), to a door assembly (11) and/or to the surrounding floor (14), and a control apparatus for controlling the lifting system (30) and the positioning system (50) such,
- that the platform (20) can be automatically brought from a stowed position to a loading position on the surrounding floor (14), and/or
- that the platform (20) is automatically movable from a loading position on the surrounding floor (14) to a vehicle position suitable for stepless transfer of the passenger (12) from the platform (20) through a door assembly (11) into an inner space (7) of the passenger transport vehicle (1) and back, and/or
- that the platform (20) is automatically movable from a vehicle position suitable for stepless transfer of the passenger (12) from an inner space (7) of the passenger transport vehicle (1) through a door assembly (11) onto the platform (20) into a stowed position and back.

14. The passenger transport vehicle (1) of claim 13, wherein the sensor arrangement comprises at least one distance sensor (25) being arranged on the platform (20) for detecting a vertical distance (26) from the platform (20) or a ramp (24) of the platform (20) to the surrounding floor (14).

## Revendications

1. Véhicule de transport de personnes (1) du transport public de personnes, présentant
- une caisse de voiture (6),
- un plancher de véhicule (8) prévu dans la caisse de voiture (6) pour la réception de passagers (12), de telle sorte qu'une différence de hauteur (9) est formée entre un niveau de plancher du plancher de véhicule (8) et un niveau de sol d'un sol environnant (14) d'un environnement de véhicule (2) immédiat, et
- un dispositif de levage (13) pour un passager (12) permettant de franchir la différence de hauteur (9),
- dans lequel le dispositif de levage (13) présente
∘ une plate-forme (20) pour la réception du passager (12),
∘ un appareil de levage (30) comportant une unité de levage (31) disposée de manière à pouvoir être déplacée par rapport à la caisse de voiture (6) dans une direction verticale (4) et permettant de lever la plate-forme (20) et le passager (12), en particulier au moins partiellement, dans la direction verticale (4) et
∘ un appareil de positionnement (50) conçu pour guider et déplacer la plate-forme (20) et le passager (12) pendant le levage, en particulier au moins partiellement, dans une direction horizontale ou une direction transversale (5),
dans lequel la plate-forme (20) est soutenue respectivement par l'intermédiaire de l'appareil de levage (30) et par l'intermédiaire de l'appareil de positionnement (50) par rapport à la caisse de voiture (6), de sorte qu'un flux de force allant de la plate-forme (20) à la caisse de voiture (6) est réalisé en parallèle par l'intermédiaire de l'appareil de levage (30) et par l'intermédiaire de l'appareil de positionnement (50).

2. Véhicule de transport de personnes (1) selon la revendication 1, présentant un appareil d'alignement (40) conçu pour maintenir et/ou aligner la plate-forme (20) dans un alignement déterminé, en particulier horizontal.

3. Véhicule de transport de personnes (1) selon la revendication 2, dans lequel l'appareil d'alignement (40) est conçu avec un élément d'alignement (46), de sorte qu'une position inclinée (49) de la plate-forme (20) peut être réglée par rapport à une horizontale jusqu'à +/- 10°, de préférence jusqu'à +/- 5°, de manière particulièrement préférée jusqu'à +/- 3°.

4. Véhicule de transport de personnes (1) selon l'une des revendications 2 à 3, dans lequel la plate-forme (20) est reliée à l'appareil de levage (30) au moyen de l'appareil d'alignement (40), et dans lequel l'appareil d'alignement (40) est disposé sur l'appareil de levage (30) de telle sorte que l'appareil d'alignement (40) est prévu de manière à pouvoir être déplacé par rapport à la caisse de voiture (6) dans la direction verticale (4).

5. Véhicule de transport de personnes (1) selon la revendication 4, dans lequel l'appareil de levage (30) présente l'unité de levage (31), un guide vertical (32) et un entraînement de levage (33), de telle sorte que l'unité de levage (31) est montée de manière à pouvoir être déplacée par rapport à la caisse de voiture (6) au moyen du guide vertical (32) dans la direction verticale (4), et un mouvement de l'unité de levage (31) est permis au moyen de l'entraînement de levage (33).

6. Véhicule de transport de personnes (1) selon la revendication 5, dans lequel l'appareil de levage (30) est conçu comme un entraînement par vis, en particulier comportant des moyens de guidage.

7. Véhicule de transport de personnes (1) selon l'une des revendications précédentes 4 à 6, dans lequel la plate-forme (20) est reliée de manière à pouvoir tourner à l'appareil d'alignement (40) au moyen d'au moins un support (43, 44), de telle sorte que la plate-forme (20) est disposée de manière à pouvoir pivoter autour de l'appareil d'alignement (40) dans un sens de pivotement (15).

8. Véhicule de transport de personnes (1) selon la revendication 7,
- dans lequel l'appareil d'alignement (40) présente une base d'alignement (47) comportant un premier point d'appui (41) et un second point d'appui (42), un premier support (43) mis en place de manière à pouvoir tourner sur le premier point d'appui (41) et un second support (44) mis en place de manière à pouvoir tourner sur le second point d'appui (42),
- dans lequel le premier support (43) est relié à un premier point de fixation (21) de la plate-forme (20) et le second support (44) est relié à un second point de fixation (22) de la plate-forme (20), et
- dans lequel la base d'alignement (47), les points d'appui (41, 42), les premier et second supports (43, 44), les points de fixation (21, 22) et/ou la plate-forme (20) sont reliés les uns aux autres et conçus de telle sorte que l'alignement de la plate-forme (20) dans la direction horizontale (5) est lié mécaniquement avec un alignement de la base d'alignement (47).

9. Véhicule de transport de personnes (1) selon la revendication 7 ou 8, dans lequel le support (43, 44), en particulier un premier support (43) et un second support (44), sont formés en particulier de manière incurvée, en particulier de manière concave par rapport au véhicule de transport de personnes (1), de telle sorte qu'au moins un support (43, 44), en particulier les deux supports (43, 44), assurent une fonction de garde-corps pour le passager (12).

10. Véhicule de transport de personnes (1) selon l'une des revendications 7 à 9, dans lequel l'appareil de positionnement (50) est prévu entre la caisse de voiture (6) et la plate-forme (20) de telle sorte que, par l'actionnement de l'appareil de positionnement (50), une position de la plate-forme (20) dans le sens de pivotement (15) autour de l'appareil d'alignement (40) et/ou autour de l'appareil de levage (30) peut être réglée.

11. Véhicule de transport de personnes (1) selon l'une des revendications 7 à 10, dans lequel le dispositif de levage (13) et l'appareil de positionnement (50) sont conçus et reliés à la plate-forme (20) de telle sorte qu'une position de la plate-forme (20) dans la direction verticale (4) peut être réglée à la fois au moyen du dispositif de levage (13), en particulier au moyen de l'appareil de levage (30), et au moyen de l'appareil de positionnement (50).

12. Véhicule de transport de personnes (1) selon l'une des revendications 10 ou 11, dans lequel l'appareil de positionnement (50) est relié, à une extrémité, à un palier de positionnement (53) au niveau de la caisse de voiture (6) et, à une autre extrémité, à un point de positionnement (23) de la plate-forme (20).

13. Véhicule de transport de personnes (1) selon l'une des revendications précédentes,
- présentant au moins un dispositif capteur pour la détection d'une position de la plate-forme (20), en particulier par rapport au véhicule de transport de personnes (1), par rapport à un dispositif formant porte (11) et/ou par rapport au sol environnant (14), et un dispositif de commande pour la commande de l'appareil de levage (30) et de l'appareil de positionnement (50),
- de telle sorte que la plate-forme (20) peut être amenée automatiquement d'une position de rangement vers une position de chargement sur le plancher environnant (14), et/ou
- de telle sorte que la plate-forme (20) peut être amenée automatiquement d'une position de chargement sur le sol environnant (14) vers une position de véhicule adaptée pour le passage continu du passager (12) de la plate-forme (20), à travers un dispositif formant porte (11) et jusque dans un espace intérieur (7) du véhicule de transport de personnes (1), et être ramenée, et/ou
- de telle sorte que la plate-forme (20) peut être amenée automatiquement d'une position de véhicule, adaptée pour le passage continu du passager (12) d'un espace intérieur (7) du véhicule de transport de personnes (1), à travers un dispositif formant porte (11) et sur la plate-forme (20), vers une position de rangement, et être ramenée.

14. Véhicule de transport de personnes (1) selon la revendication 13, dans lequel le dispositif capteur présente au moins un capteur de distance (25) disposé au niveau de la plate-forme (20) et permettant de détecter une distance verticale (26) de la plate-forme (20) ou d'une rampe (24) de la plate-forme (20) par rapport au sol environnant (14).
